Europäisches Patentamt

European Patent Office

Office européen des brevets

(11) Publication number: **0 387 014**
**A1**

## (12) EUROPEAN PATENT APPLICATION

(21) Application number: 90302396.8

(22) Date of filing: 07.03.90

(51) Int. Cl.5: **G02B 27/00, H01S 3/00**

(30) Priority: 08.03.89 GB 8905289

(43) Date of publication of application:
**12.09.90 Bulletin 90/37**

(84) Designated Contracting States:
**DE GB**

(71) Applicant: **CROSFIELD ELECTRONICS LIMITED**
**Wedgewood Way**
**Stevenage Hertfordshire SG1 4QN(GB)**

(72) Inventor: **Gibbs, Ronald**
**82 Tring Road**
**Dunstable(GB)**
Inventor: **Aughton, John Edward**
**49 Neale Close**
**London N2 0LF(GB)**

(74) Representative: **Skone James, Robert Edmund**
**et al**
**GILL JENNINGS & EVERY 53-64 Chancery**
**Lane**
**London WC2A 1HN(GB)**

(54) **Reducing aberrations in radiation beams.**

(57) A device for controlling astigmatism in a beam of radiation (4). The device comprises two focusing elements (5,6), each focusing element having a different focusing power in two orthogonal planes which include the beam axis (13). Each focusing element (5,6) is relatively rotatable about the axis of the beam in order to control astigmatism in the beam.

Fig.1a.

Fig.1b.

EP 0 387 014 A1

# REDUCING ABERRATIONS IN RADIATION BEAMS

The invention relates to methods and apparatus for reducing aberrations such as astigmatism in radiation beams.

Semiconductor lasers generally exhibit some form of astigmatic aberration in their output beam. In addition, due to the wide tolerance margins of these lasers, the degree of astigmatism is neither constant nor predictable for any particular type of semiconductor laser. In the past it has therefore been necessary to select astigmatic optical focusing components of the correct value to match each semiconductor laser, in order to correct the astigmatism.

In accordance with one aspect of the present invention a method for controlling astigmatism in a beam of radiation comprises passing a beam, centred on an axis, through two focusing elements, each focusing element having a different focusing power in two orthogonal planes which include the beam axis; and relatively rotating the focusing elements about the axis of the beam in order to control astigmatism in the beam.

In accordance with another aspect of the present invention, a device for substantially controlling astigmatism in a beam of radiation comprises two focusing elements, each focusing element having a different focusing power in two orthogonal planes which include the beam axis; each focusing element being relatively rotatable about the axis of the beam in order to control astigmatism in the beam.

By providing two focusing elements which are continuously rotatable relative to each other and to the beam of radiation it is possible to correct for variable amounts of astigmatism in a radiation source. Hence, a single focusing device can be used with different beam sources.

Preferably, the focusing elements are thin lenses and typically each comprises a weak cylindrical lens with a positive focusing power. However, in an alternative embodiment the focusing elements could be mirrors with either positive or negative focusing powers, or a combination.

In the preferred embodiment, the input beam of radiation incident on the focussing elements is substantially collimated as is the beam from the elements.

The output beam may be fully corrected for astigmatism, or may be adjusted to have a controlled amount of astigmatism such as to compensate for astigmatism introduced by subsequent beam shaping devices, such as compression prism.

In the preferred embodiment the lenses are both convex lenses, typically each having a focal length of approximately 5 metres.

Although the invention may be used to correct the output beams of semiconductor lasers, it is possible to use the invention to correct astigmatism in other radiation beams, such as far infra-red and microwave frequencies, using appropriate focusing elements.

An example of a method and device in accordance with the invention will now be described with reference to the accompanying drawings, in which:-

Figures 1a and 1b show a typical beam, from a semiconductor laser in mutually orthogonal planes;

Figures 2a and 2b show schematically in mutually orthogonal planes a device when used with an astigmatic semiconductor laser;

Figures 3a and 3b shows schematically in mutually orthogonal planes the device when used with a non-astigmatic semiconductor laser;

Figures 4a and 4b show the orientations of the focusing elements of the devices in Figure 2 and Figure 3 respectively; and,

Figure 4c shows an intermediate orientation of the focusing elements.

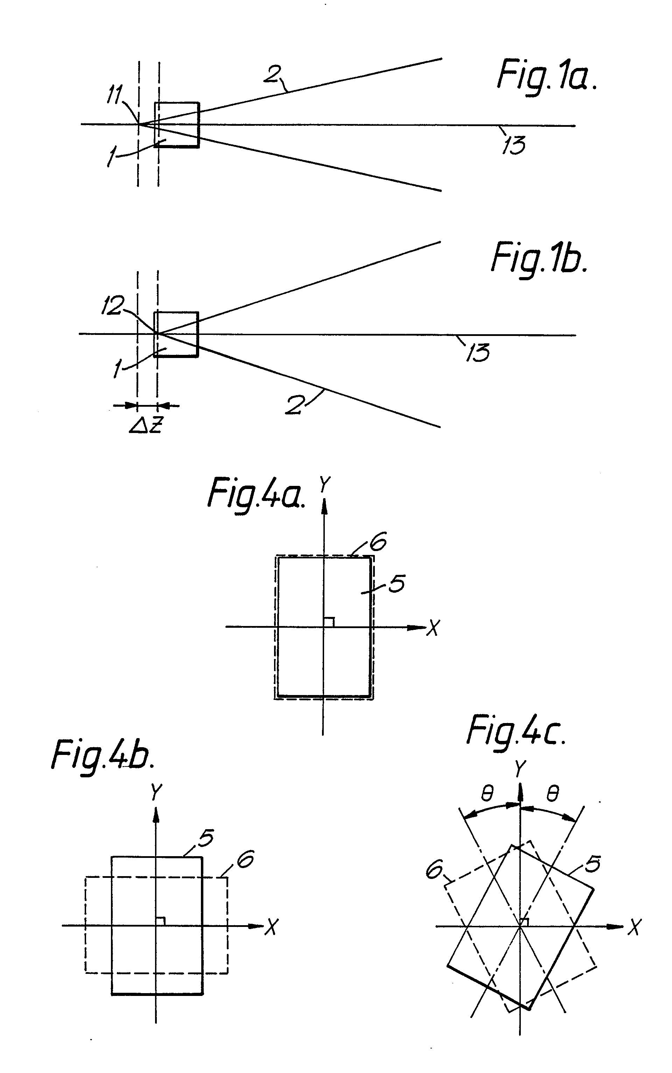

Figures 1a and 1b show the divergence of an output beam 2 from a semiconductor laser 1 in mutually orthogonal planes. In Figure 1a the divergence of the output beam 2 is less than the divergence of the output beam 2 in Figure 1b, and this results in an elliptical beam profile. This is undesirable if a circular beam profile is required. It can be seen in Figures 1a and 1b that there is also astigmatism present in the output beam 2. In Figure 1a the output beam 2 has a virtual focus at the point 11 and in Figure 1b the output beam 2 has a virtual focus at the point 12. The virtual foci 11, 12 are at different positions separated by a distance $\Delta Z$ on the central axis 13 which shows that astigmatism is present in the output beam 2. For a semiconductor laser the distance $\Delta Z$ is typically in the range 0 to 6μm, with a maximum of 8μm.

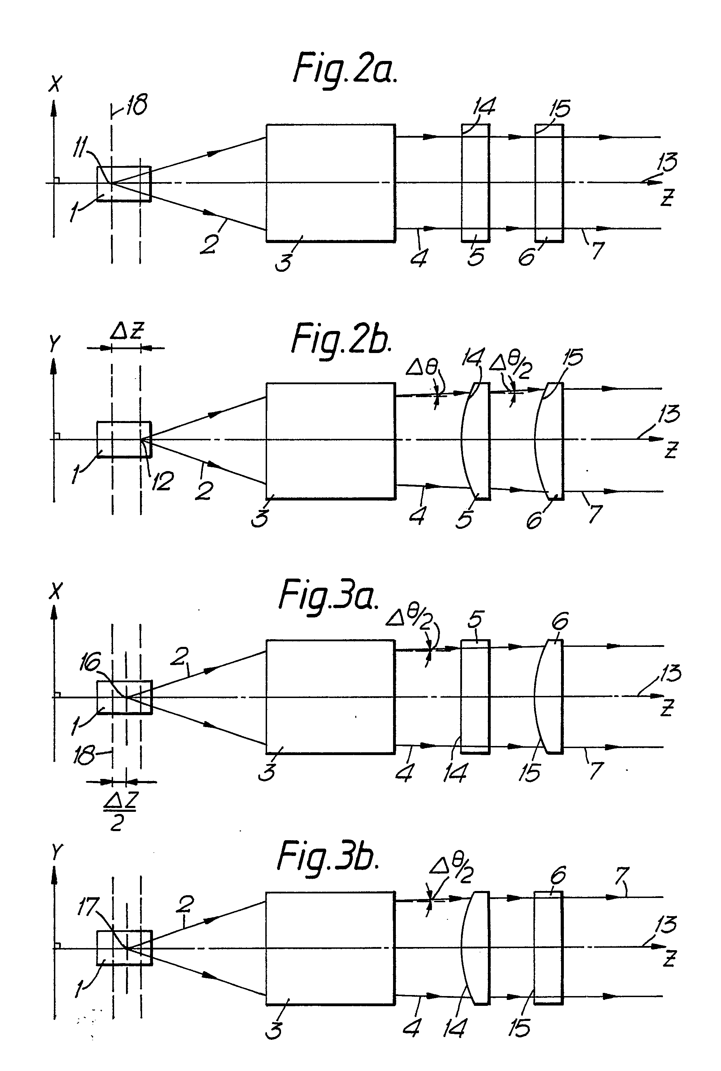

Figures 2a and 2b show a semiconductor laser 1 with an astigmatic output beam 2 and the plane of Figure 2a is mutually orthogonal to the plane of Figure 2b. In Figures 2a and 2b the astigmatic, elliptical output beam 2 from the semiconductor laser 1 passes through a compound lens 3 having a focal plane 18 to generate a beam 4. This beam 4 then passes through two thin cylindrical lenses 5, 6 to generate an output beam 7.

The lenses 5, 6 are continuously rotatable, relative to each other, about a central axis 13. In the particular example shown in Figures 2a and 2b the curved surfaces 14, 15 of the lenses 5, 6 are mutually parallel although they can each be relatively rotated to a position where they are not parallel. Typically, the focal lengths of the lenses 5, 6 are approximately + 5 metres.

In the plane of Figure 2a the virtual focus of the semiconductor laser 1 is at the point 11 on the central axis 13 which coincides with the focal plane 18 of the compound lens 3. Hence, the beam 4 is collimated and does not require correcting by the cylindrical lenses 5, 6. In order to achieve this the cylindrical lenses 5, 6 are orientated so that they have no focusing power in this plane.

However, in Figure 2b the virtual focus of the semiconductor laser 1 lies at the point 12 on the central axis 13 which is a distance $\Delta Z$ from the focal plane 18 of the compound lens 3. As the virtual focus of the output beam 2 in the plane of Figure 2b does not lie on the focal plane 18, the beam 4 from the compound lens 3 is not exactly collimated but diverges by an angle $\Delta\theta$. This divergence, $\Delta\theta$ is corrected in two stages by the cylindrical lenses 5, 6 to produce output beam 7 which is collimated in the plane of Figure 2b. As the lenses 5, 6 have zero focusing power in the plane of Figure 2a they have a maximum focusing power in the plane of Figure 2b because the plane of Figure 2b is mutually orthogonal to the plane of Figure 2a. Hence the divergence $\Delta\theta$ of the beam 4 is reduced to $\Delta\theta/2$ by the lens 5 and then reduced to substantially zero divergence by the lens 6.

In the example shown in Figures 2a and 2b the astigmatic separation $\Delta Z$ of the virtual focus points 11, 12 of the output beam 2 of the semiconductor laser 1 is the maximum separation $\Delta Z$ which can be corrected and typically the lenses 5, 6 are chosen so that the maximum $\Delta Z$ is about 8$\mu$m.

Figures 3a and 3b show a semiconductor laser 1 with zero astigmatism in the output beam 2. The plane of Figure 3a is mutually orthogonal to the plane of Figure 3b. The compound lens 3 and the thin lenses 5, 6 in Figures 3a and 3b are identical to the compound lens 3 and the thin lenses 5, 6 in Figures 2a and 2b. However, in Figures 3a and 3b the curved surfaces 14, 15 of the lenses 5, 6 are mutually orthogonal and not parallel, as in Figures 2a and 2b. Hence, the combination of the two thin lenses 5, 6 in Figures 3a and 3b provides equal focusing power in both the plane of Figure 3a and the plane of Figure 3b.

In order to obtain a collimated output beam 7 it is therefore necessary to offset the virtual foci of the output beam 2 from the focal plane 18 of the compound lens 3 by a distance equal to half of the maximum astigmatic separation which can be corrected using the lenses 5, 6. This distance is shown as $\Delta Z/2$ in Figures 3a and 3b.

In Figure 3a, as the virtual focus 16 of the output beam 2 does not lie on the focal plane 18, the beam 4 from the compound lens 3 is not precisely collimated and diverges at an angle $\Delta\theta/2$. The beam 4 then passes through the lens 5 undeviated and is corrected by the lens 6 to produce a collimated output beam 7. In Figure 3b, the plane of which is orthogonal to the plane of Figure 3a, the beam 4 from the compound lens 3 also diverges at an angle of $\Delta\theta/2$ and is corrected by the thin lens 5. It then passes through the thin lens 6 undeviated to give a collimated output beam 7.

It is possible to achieve a collimated output beam 7 for all astigmatic separations between zero and the maximum astigmatic separation, which is determined by the lenses 5, 6, by rotating the lenses 5, 6, relatively to each other so that the curved surfaces 14, 15 of the lenses 5, 6 are at an angle to each other.

Figures 4a, 4b and 4c are end of views of the lenses 5, 6, showing the lenses 5, 6 at different orientations. In these Figures the lenses 5, 6 are shown as being rectangular and the lens 6 is shown in phantom for clarity.

Figure 4a corresponds to the orientation of the lenses 5, 6 shown in Figures 2a and 2b in which the curved surfaces 14, 15 are parallel and the plane of maximum focusing power lies along the y axis.

Figure 4b corresponds to the orientation of the lenses shown in Figures 3a and 3b. In this case the lens 5 again has its plane of maximum focusing power passing through the y axis. However, the lens 6 has its plane of maximum focusing power passing through the x axis.

Figure 4c corresponds to an orientation of the lenses 5, 6 where the astigmatic separation is between zero and the maximum separation. In this case the plane of maximum focusing power for each lens 5, 6 are at a mutual angle of $2\theta$ where $\theta$ is any angle between 0° and 45°.

In operation the semiconductor laser 1 is switched on and by rotating the lenses 5, 6 relatively to each other and relatively to the collimated beam 4 it is possible to achieve a position of the lenses where the output beam 7 is both circular and non-astigmatic. This then results in a circular, non-astigmatic output beam 10. In order to facilitate the correct positioning of the lenses 5, 6 it is desirable to use an interferometer to analyse the output beam 7.

Although the lenses 5, 6 in Figure 1 are shown with their curved surfaces 14, 15 directed towards the beam 4 this is not essential. The curved surfaces 14, 15 could be directed towards the output beam 7 or could be directed in any other combination of directions, for example, the curved surface 14 of the lens 5 could face the beam 4 and the curved surface 15 of the lens 6 could face the output beam 7.

It has been found that by using a combination of two cylindrical thin lenses which are continuously rotatable relative to each other and a collimated beam of radiation it is possible to use two lenses 5, 6 having fixed focal lengths to compensate for astigmatism in an output beam from most semiconductor lasers.

## Claims

1. A method for controlling astigmatism in a beam of radiation (4), the method comprising passing an input beam, centred on an axis (13), through two focusing elements (5,6), each focusing element having a different focusing power in two orthogonal planes which include the beam axis; and relatively rotating the focusing (5,6) elements about the axis (13) of the beam in order to control astigmatism in the beam.

2. A method according to claim 1, wherein the input beam of radiation incident on the focusing elements (5,6) is substantially collimated.

3. A method according to claim 1 or claim 2, wherein the beam of radiation (4) has been generated by a semiconductor laser.

4. A device for controlling astigmatism in a beam of radiation (4), the device comprising two focusing elements (5,6), each focusing element having a different focusing power in two orthogonal planes which include the beam axis (13); each focusing element being relatively rotatable about the axis of the beam in order to control astigmatism in the beam.

5. A device according to claim 4, wherein the focusing elements (5,6) are thin lenses.

6. A device according to claim 4 or claim 5, wherein the focusing elements (5,6) each comprise a weak cylindrical lens with a positive focusing power.

7. A device according to claim 5 or claim 6, wherein the lenses (5,6) are convex lenses.

8. A device according to claim 7, wherein each lens has a focal length of about 5 metres.

*Fig.1a.*

11

2

1

13

*Fig.1b.*

12

2

1

13

Δz

*Fig.4a.*

Y

6

5

X

*Fig.4b.*

Y

5

6

X

*Fig.4c.*

Y

θ    θ

6    5

X

Fig.2a.

Fig.2b.

Fig.3a.

Fig.3b.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 974 507 (R.G. CHEMELLI et al.) * Column 1, lines 34-44; column 3, line 58 - column 4, line 2; column 5, lines 38-57; column 7, lines 41-48; figures 1,2,4,8,9 * | 1-4,6 | G 02 B 27/00 H 01 S 3/00 |
| A | US-A-4 318 594 (HIROSHI HANADA) * Column 1, lines 10-25; column 4, line 57 - column 5, line 64; figures 1,8,9 * | 1-4,6,7 | |
| A | DE-A-3 305 675 (SONY CORP.) * Page 7, line 22 - page 8, line 6; page 10, lines 10-30; figure 1 * | 1,3,4,6 | |
| A | US-A-3 762 793 (STIG LEOPOLD ULLSTIG) * Column 1, line 25 - column 3, line 20; figures 1,2 * | 1,4,6 | |
| A | US-A-4 253 735 (NAOTO KAWAMURA et al.) * Column 1, lines 1-68; figure 1 * | 1,3,4 | |
| A | ELECTRO OPTICS, no. 6, June 1983, pages 56-60, Chicago, Illinois, US; A.R. TEBO: "Writing with diode lasers" * Chapter: "Correcting defects in diode-laser beams"; figure 4 * | 1,4,5 | TECHNICAL FIELDS SEARCHED (Int. Cl.5) G 02 B H 01 S |
| A | G. SCHRÖDER: "Technische Optik", 2nd edition 1974, pages 52-55, Vogel-Verlag, Würzburg, DE * Page 54; figure 2.33 * | 1,4,6,7 | |

The present search report has been drawn up for all claims

| Place of search | Date of completion of the search | Examiner |
|---|---|---|
| THE HAGUE | 05-06-1990 | GNUGESSER H.M. |